Europäisches Patentamt

(19) European Patent Office

Office européen des brevets

(11) EP 0 785 343 A1

(12) **EUROPEAN PATENT APPLICATION**

(43) Date of publication:
23.07.1997 Bulletin 1997/30

(51) Int. Cl.⁶: **F01N 7/00**, F02D 41/14

(21) Application number: 97100743.0

(22) Date of filing: 17.01.1997

(84) Designated Contracting States:
DE FR GB IT

(30) Priority: 17.01.1996 JP 6144/96
18.01.1996 JP 6907/96

(71) Applicant: YAMAHA HATSUDOKI KABUSHIKI
KAISHA
Iwata-shi Shizuoka-ken, 438 (JP)

(72) Inventors:
• Motoyama, Yu
Iwata-shi, Shizuoka-ken (JP)
• Moriya, Yoshihiko
Iwata-shi, Shizuoka-ken (JP)

(74) Representative: Grünecker, Kinkeldey,
Stockmair & Schwanhäusser
Anwaltssozietät
Maximilianstrasse 58
80538 München (DE)

(54) **Internal combustion engine**

(57) An internal combustion engine (11) for a vehicle, for example a motorcycle (1) comprises at least one exhaust pipe (31a-c) extending, as seen in driving direction of said vehicle, from at least one exhaust port (27a-c) of at least one combustion chamber (18) in at least one cylinder (11a-c) rearwardly from said engine. At least one exhaust wall temperature detecting means (37a-c) as well as a control unit (40) are provided for controlling said engine at least on the basis of the exhaust wall temperature detected. Said at least one exhaust wall temperature detecting means is located at the wall of said at least one exhaust pipe in cross-section thereof at a position outside of a range (F) of said wall directed to said driving direction.

FIGURE 4

FIGURE 3

EP 0 785 343 A1

## Description

This invention relates to an internal combustion engine for a vehicle, for example a motorcycle comprising at least one exhaust pipe extending, as seen in driving direction of said vehicle, from at least one exhaust port of at least one combustion chamber in at least one cylinder rearwardly from said engine, at least one exhaust wall temperature detecting means, and a control unit for controlling said engine at least on the basis of the exhaust wall temperature detected.

A system has been previously proposed in which exhaust gas temperature is detected and fedback for engine control so as to be utilized for adjusting the transmission time of exhaust surge waves. However, since the temperature of exhaust gas itself changes continuously and the amount of changes is also great, detection of exhaust gas temperature by only a simple procedure is unreliable and can not be utilized for engine control. In view of the foregoings, I have disclosed an art for use in engine operation in which wall temperature of the exhaust gas pipe is detected in place of exhaust gas temperature and fedback for the control of fuel supply to adjust the transmission time of exhaust surge waves.

According to this invention, changes in exhaust pipe wall temperature are moderate so that the engine can be controlled stably and exactly, whereby the intended object of improved engine output and fuel consumption can be achieved.

As changes in exhaust pipe wall temperature are milder than those in exhaust gas temperature as described above, it is desirable to use the exhaust pipe wall temperature as a parameter for adjusting the transmission time of exhaust surge waves. However, the temperature of the exhaust pipe decreases toward the downstream side, as well as temperature change (long-period change, desired measure to be detected) due to changes in operating conditions, so that it is difficult to measure the temperature change with fine resolution.

Therefore, it is desirable to provide means for detecting wall temperature of the exhaust pipe on the upstream side.

Other preferred embodiments of the present invention are laid down in further dependent claims.

In the following, the present invention is explained in greater detail with respect to several embodiments thereof in conjunction with the accompanying drawings, wherein:

Fig. 1 is a schematic side view of a motorcycle carrying a two-stroke engine utilizing a first embodiment of an operating condition control unit of this invention;

Fig. 2 is a schematic plan view of the engine 11 utilizing the first embodiment;

Fig. 3 is a schematic longitudinal sectional view of the first cylinder of the engine 11,

Fig. 4 is a sectional view taken along line A-A of Fig. 3;

Fig. 5 is a schematic block diagram of the control unit according to the first embodiment;

Fig. 6 shows, in (a) through (c), engine control maps of the first embodiment;

Fig. 7 is a flow chart showing operations in the first embodiment;

Fig. 8 is a diagram showing an example of the relation between ignition timing of cylinders and processing timing of the control unit in the first embodiment;

Fig. 9 is a diagram showing another example of the relation between ignition timing of cylinders and processing timing of the control unit in the first embodiment;

Fig. 10 shows, in (a) through (d), other configurations of the exhaust pipe;

Fig. 11 is a view of another embodiment of the timing changing means;

Fig. 12 is a view of another embodiment of the timing changing means;

Fig. 13 is a view of still another embodiment of the timing changing means;

Fig. 14 is a view of still another embodiment of the timing changing means;

Fig. 15 is a view of yet another embodiment of an engine and the timing changing means;

Fig. 16 is a view of another embodiment of the timing changing means;

Fig. 17 is a schematic side view of a motorcycle showing another embodiment of the mounting position of the exhaust pipe wall temperature detecting means;

Fig. 18 is a schematic plan view of an essential part of the motorcycle shown in Fig. 17;

Fig. 19 is a schematic bottom view of a motorcycle showing another embodiment of the mounting position of the exhaust pipe wall temperature detecting means in a vehicle having the exhaust pipe 31 extending rearwardly, passing under the engine 11; and

Fig. 20 shows another mounting method of the exhaust pipe wall temperature detecting means, Fig. 20(a) is a partial enlarged view of the bent portion of the exhaust pipe, Fig. 20(b) is a sectional view taken along line B-B of Fig. 20(a), and Fig. 20(c) is a sectional view taken along line C-C of Fig. 20(b).

Several embodiments of an operating condition control unit for engines according to this invention (hereinafter referred to as an operating condition control unit), will be described below with reference to the accompanying drawings.

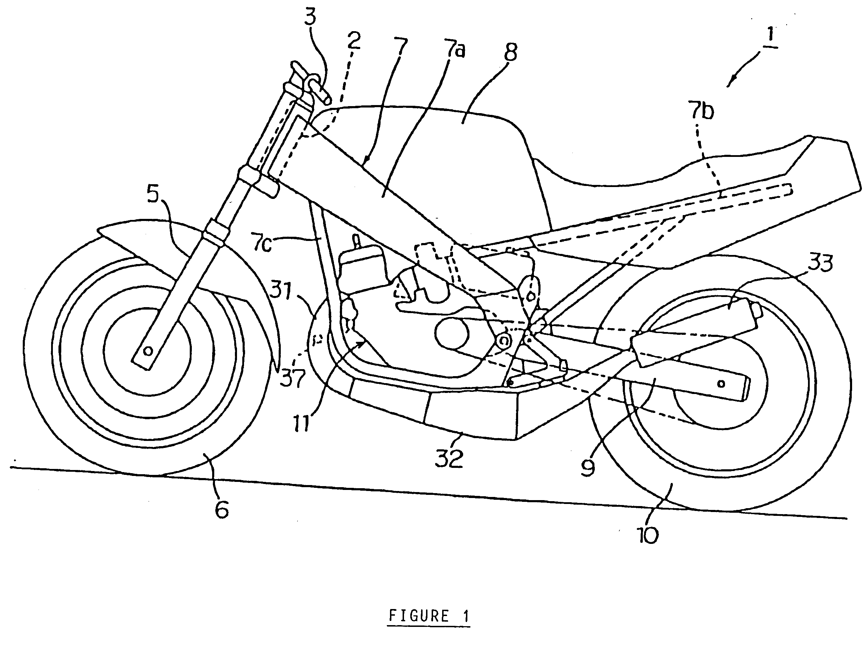

Fig. 1 is a schematic side view of a motorcycle carrying a two stroke-engine controlled by an operating condition control unit according to this invention, and numeral 1 designates a motorcycle.

A head pipe 2 supports a steering shaft (not shown) having at the upper end a handle 3, for rotation. To the steering shaft are connected a pair of right and left front forks 5, which support a front wheel 6 therebetween. To the head pipe 2 is connected a frame 7. The frame 7 comprises a pair of right and left main frames 7a fixed at the front end to the head pipe 2, rear frames 7b extending from the rear side of the main frames 7a further rearward, and down tubes 7c first extending downwardly from the front side of the main frames 7a and then rearwardly generally horizontally and connected at the rear ends to the rear ends of the main frames 7a, over which is mounted a fuel tank 8. Numeral 9 designates swing arms 9. The swing arms support at the rear end a rear wheel 10, and is mounted at the front end to the main frames 7a for swinging movement.

An engine 11 is suspended by the main frames 7a and down tubes 7c.

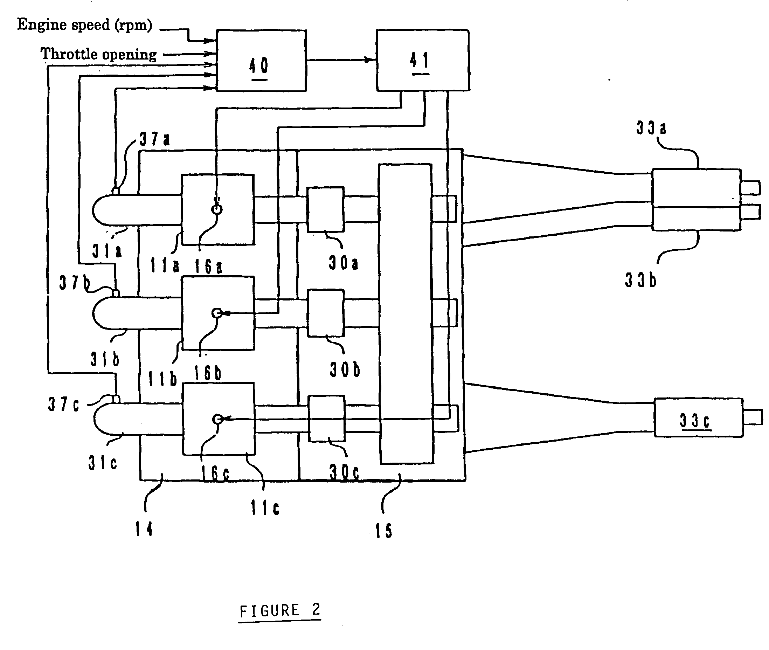

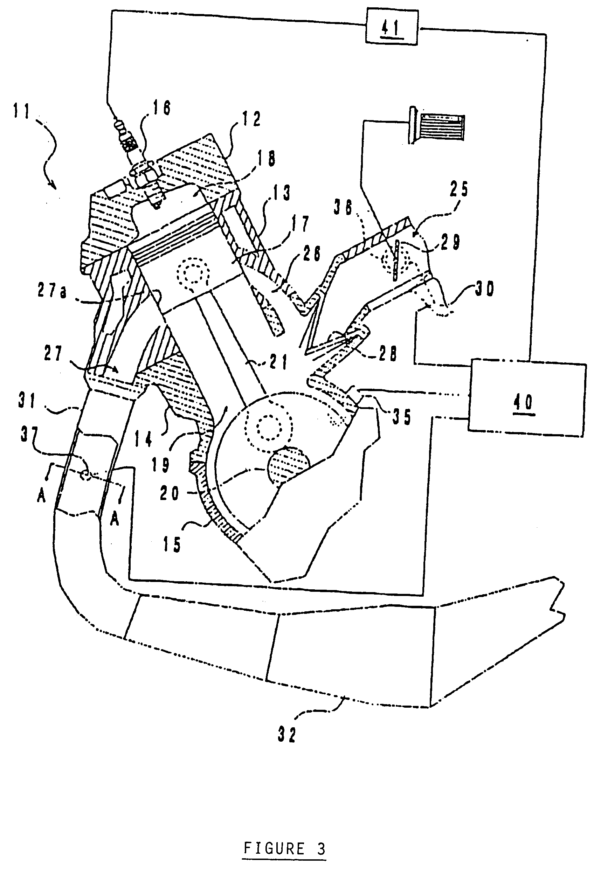

Fig. 2 is a schematic plan view of the engine 11, Fig. 3 is a schematic longitudinal sectional view of the first cylinder of the engine 11 of Fig. 3.

As shown in the figure, the engine 11 is a parallel three cylinder two-stroke engine having three cylinders (the first through the third cylinder) 11a, 11b, 11c, and comprises a cylinder head 12, a cylinder block 13, and crankcases 14, 15 joined in layers together. Inside the engine are defined cylinders 11a-11c, and in the cylinder head 12 are provided ignition plugs 16 (16a, 16b, 16c) corresponding to the cylinders 11a-11c, respectively.

As shown in Fig. 3, in the cylinders 11a-11c are disposed pistons 17 for sliding movement, respectively, which are connected to a crankshaft 20 through connecting rods 21. The inside space of each cylinder is divided by the piston 17 into a combustion chamber 18 and a crank chamber 19.

Numeral 25 designates an intake pipe, numeral 26 a scavenging passage, and numeral 28 a reed valve. In the Intake pipe 25 are provided a butterfly type throttle valve 29 and a carburetor 30.

Numeral 27 in the figure designates an exhaust passage. The exhaust passage 27 has one end open to the cylinder and constituting an exhaust port 27a, and the other end connected to an exhaust pipe 31. The exhaust pipe first extends, at the upstream side, a little toward the front of the vehicle, or forwardly of the engine, then is bent to extend rearwardly so as not to interfere with other parts, and at the downstream side, is provided with an expansion chamber 32. Action of the expansion chamber 32 produces surging movement in exhaust gas discharged from the exhaust port, which movement causes the pressure near the exhaust port 27a of the exhaust passage 27 to be negative at the early stage of the exhaust stroke to accelerate the discharge of the exhaust gas, as well as to be positive at the latter stage of the exhaust stroke to push unburnt mixture leaking from the combustion chamber 18 back into the combustion chamber 18 again so as to prevent leakage.

In Fig. 1-3, numeral 33 (33a-33c) designates a muffler.

The engine constructed as described above is provided with engine speed detecting means 35 and throttle opening detecting means 36, and the exhaust pipes 31 (31a, 31b, 31c) of the cylinders 11a-11c are provided with exhaust pipe wall temperature detecting means 37 (37a, 37b, 37c), respectively.

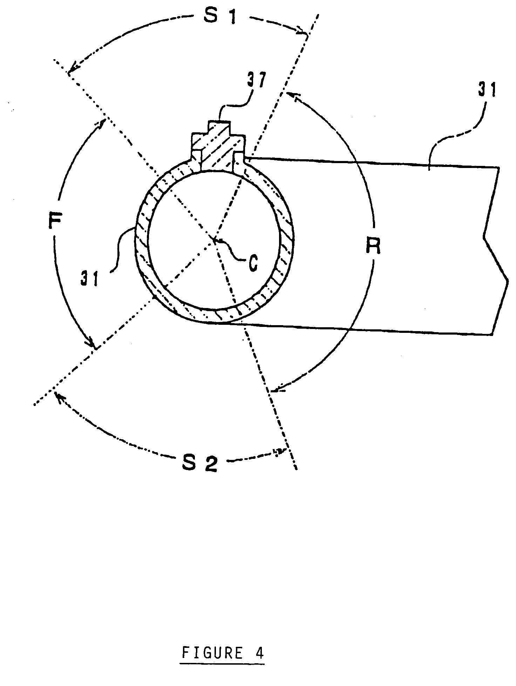

Fig. 4 is a sectional view taken along A-A of Fig. 3.

As shown in Fig. 4, if the outside surface extending on the outside of the exhaust pipe 31 in the range of about 120 degrees with respect to the center point C is defined as F, the back side surface on the back side in the range of about 120 degrees as R, and the side surfaces located between the outside surface F and the back side surface R as S1 and S2, the exhaust pipe wall temperature detecting means 37 is mounted to the exhaust pipe with its center located on the back side surface R. When the exhaust pipe wall temperature detecting means 37 is mounted to the back side surface R of the exhaust pipe 31, it is located on the rear side of the exhaust pipe 31 so that a running wind during running is blocked by the exhaust pipe 31 without blow against the exhaust pipe wall temperature detecting means 37. Further, the exhaust pipe wall temperature detecting means 37 is covered at its upper side by the upstream portion of the exhaust pipe 31, the cylinder block 13 and the like, and at the lower side by the downstream portion of the exhaust pipe 31, so that it is not exposed to rain or snow as well as flying stones from the road surface.

As described above, as a result of the exhaust pipe wall temperature detecting means 37 being mounted at a place located on the back side of the exhaust pipe 31 in the longitudinal and the vertical direction of the vehicle, the exhaust pipe wall temperature detecting means 37 is not exposed to the outside interference such as a running wind, or rain and snow, and the wall temperature of the exhaust pipe 31 can be detected exactly at all times. The exhaust pipe wall temperature detecting means 37 is also protected from flying stones during running. The mounting position of the exhaust pipe wall temperature detecting means 37 is not limited to the above-described position (shown in Figs. 1-4), but any position will be acceptable if it is not exposed to outside interference, and various alternative method can be adopted in shielding the exhaust pipe wall temperature detecting means 37 from outside interference, as described in detail later by way of example.

As shown in Fig. 4, in the bent portion of the exhaust pipe 31, if the outer side surface extending on the outer side of the exhaust pipe 31 in the range of about 90 degrees with respect to the center point C is defined as F, the inner side surface on the inner side of the exhaust pipe in the range of about 135 degrees as R, and the side surfaces located between the outer side surface F and the inner side surface R as S1 and S2, this means that the exhaust pipe wall temperature detecting means 37 is mounted to the exhaust pipe with its center located on the side surface S1. As a result of the exhaust pipe wall temperature detecting means 37 being disposed in this way, with its center located away from the outer side surface F which is liable to be affected by the temperature of exhaust gas, the exhaust pipe wall temperature detecting means 37 is prevented from detecting wall temperature erroneously under the influence of the exhaust gas. The exhaust pipe wall temperature detecting means 37 can be mounted at any position if its center is located on the surface other than the outer side surface F (that is, the inner side surface R and side surfaces S1, S2).

The engine is provided with a control unit 40, which operates an operating unit 41 (for example, CDI unit etc) according to the information detected by the detecting means 35, 36, 37 to control the ignition timing of the ignition plugs 16.

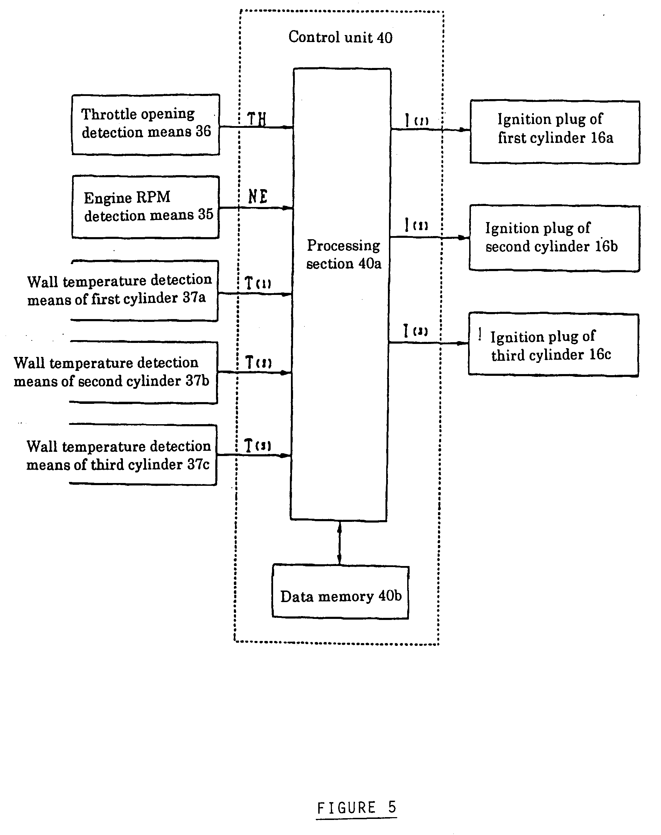

Fig. 5 is a schematic block diagram of the control unit.

As shown in the figure, to a processing section 40a of the control unit 40 is input detected signals from the detecting means 35, 36, 37. That is, the throttle opening detecting means 36 (for example, engine load sensor) mounted to the throttle valve 29 of the engine 11 outputs throttle opening signals TH to the control unit 40, and the engine speed detecting means 36 outputs engine speed signals NF to the control unit 40. The exhaust pipe wall temperature detecting means 37a-37c mounted to the exhaust pipes 31a-31c corresponding the cylinders 11a-11c, output wall temperature signals T(i) (i=1-3) of the exhaust pipes 31a-31c to the control unit 40.

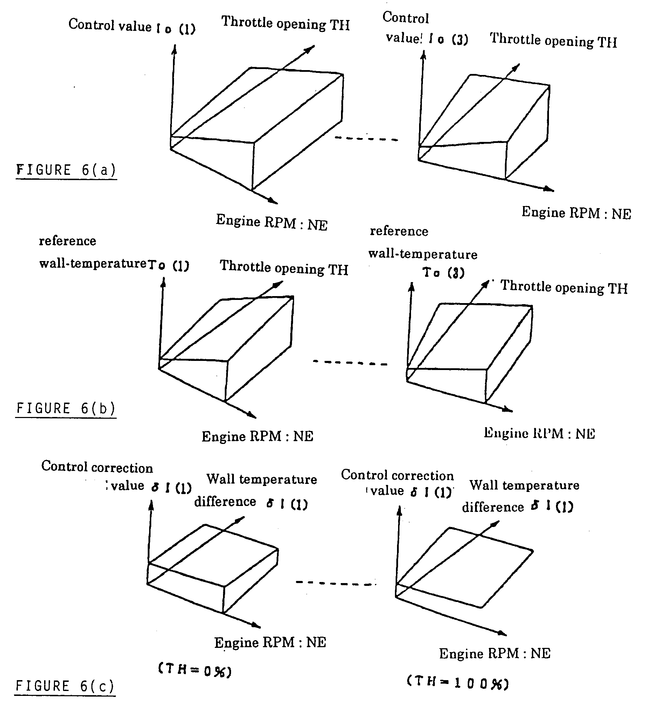

Also, the control unit 40 is provided with a data memory 40b, which stores, as shown in Fig. 6(a), several kinds of maps representing the reference control values lo(i) (i=1-3) of the ignition timing of respective cylinders corresponding to throttle opening TH and engine speed NE. In this embodiment, the ignition timing is controlled by the control unit 40 and thus the values lo are explained as the reference control values of the ignition timing, but the control values lo can be basic control values of various kinds of other devices such as exhaust timing and back pressure valve opening, therefore the data memory can store the control data values lo(i) of other devices as maps corresponding to throttle opening TH and engine speed NE. Control of these other devices will be described later.

Fig. 6(b) shows maps of the reference wall temperatures To(i) (i=1-3) corresponding to throttle opening TH and engine speed NT, of the mounting portions of the wall temperature detecting means 36 on respective cylinders 31, and the maps are stored in the data memory 40b. The reference wall temperatures To(i) refer to temperatures at which the sound velocity fits the exhaust pipe length and adequate exhaust surging effects can be produced if the exhaust pipe temperature is kept at the reference temperatures To(i), and are usually obtained from experiments in practice.

The processing section 40a of the control unit 40 reads from the maps the reference temperatures To(i) of the exhaust pipes corresponding to operating conditions, based on the results detected by the throttle opening detecting means 36 and engine speed detecting means 35, and calculates the temperature differences $\delta$ T(i) between the reference temperatures To(i) of the exhaust pipes and the actual values T(i) of the wall temperature detected by the wall temperature detecting means 37.

The data memory, as shown in Fig. 6(c), stores maps representing the control correction values $\delta$ l(i) (i=1-3) corresponding to the temperature differences $\delta$ T(i) and engine speed NE. This maps are provided for every range, for example one tenth, of the throttle opening from the completely closed state or 0% to the wide open state or 100%. These maps are provided for each cylinder, and accordingly the maps associated with Fig. 6(c) number thirty (10$\times$ 3) in all. The processing section 40a of the control unit 40 selects a map corresponding to the appropriate throttle opening TH from the maps associated with Fig. 6(c), based on the detected signals TH of the throttle opening detecting means 36, and reads a control correction values $\delta$ l(i) from the selected map, based on the temperature differences $\delta$ T(i) and the detected signals NE of the engine speed detecting means 35 to correct the ignition timing basic control values lo(i).

After the foregoing processing is completed, the control unit 40 outputs operating signals to the operating unit 41 based on the corrected control values (final value) l(i) (l(1), l(2), l(3)), the operating unit 41 causes the corresponding ignition plugs 16 to ignite at the ignition timing based on the control values l(i) output by the control unit 40, and matches the timing at which exhaust gas pressure waves of cylinders emitted from the exhaust ports 27 return to the exhaust ports 27 after having been reflected by the respective exhaust pipes 31a-31c, with the optimum timing in correspondence with operating conditions.

In this embodiment, while the control unit 40 controls the ignition timing of the ignition plugs 16 to adjust the timing at which the exhaust gas pressure waves return to the exhaust ports 27, the devices to be controlled by the control unit 40 are not limited to the ignition plugs, but any other devices, for example variable exhaust timing device and the like, may be available if the timing at which the exhaust gas pressure waves of cylinders emitted from exhaust ports return to the exhaust ports after having been reflected by the respective exhaust pipes, can be changed. Other devices by which the timing at which the exhaust gas pressure waves return to the exhaust ports can be changed, will be described later.

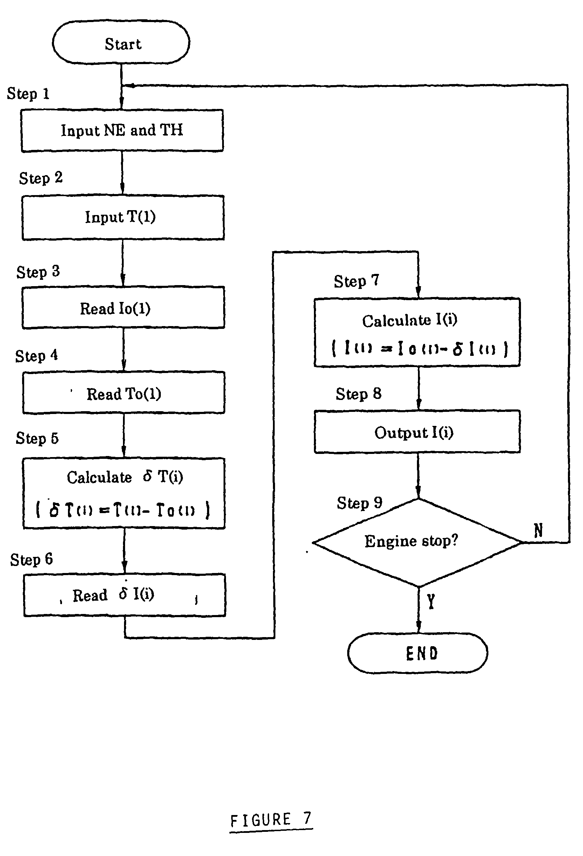

Now, functions of the control unit 40 will be described with reference to the flow chart shown in Fig. 7.

First, the processing section 40a of the control unit 40 inputs engine speed NE and throttle opening TH from the engine speed detecting means 35 and the throttle opening detecting means 36, respectively (Step 1), then actual wall temperatures T(i) of the exhaust pipes 31a, 31b, 31c from the exhaust pipe wall temperature detecting means 37a, 37b, 37c (Step 2), and reads the basic control values lo(i) of the ignition timing of the cylinders 11a, 11b, 11c from the maps corresponding to Fig. 6(a) stored in the data memory 40b, based on engine speed NE and throttle opening TH stored in Step 1 (Step 3).

Then, the precessing section 40a reads reference wall temperatures To(i) of the exhaust pipes 31a, 31b, 31c from the maps corresponding Fig. 6(b) stored in the data memory 40b based on engine speed NE and throttle opening TH stored in Step 1 (Step 4), and calculates the temperature differences δ T(i) between the actual wall temperatures T(i) of the exhaust pipes 31a, 31b, 31c stored in Step 2 and the reference wall temperatures To(i) (Step 5).

Then, the processing section 40a reads the control correction values δ I(i) from the maps for respective cylinders shown in Fig. 6(c) corresponding to throttle opening TH stored in Step 1, based on engine speed NE stored in Step 1 and the temperature differences δ T(i) calculated in Step 5 (Step 6), adds the control correction values δ I(i) to the basic control values Io(i) read in Step 3 to calculate final control values I(i) (Step 7), and outputs the final values to the operating unit 41 (Step 8).

The algorithm described above is performed for every ignition cycle until engine stop is instructed, and held up with the engine stop (Step 9).

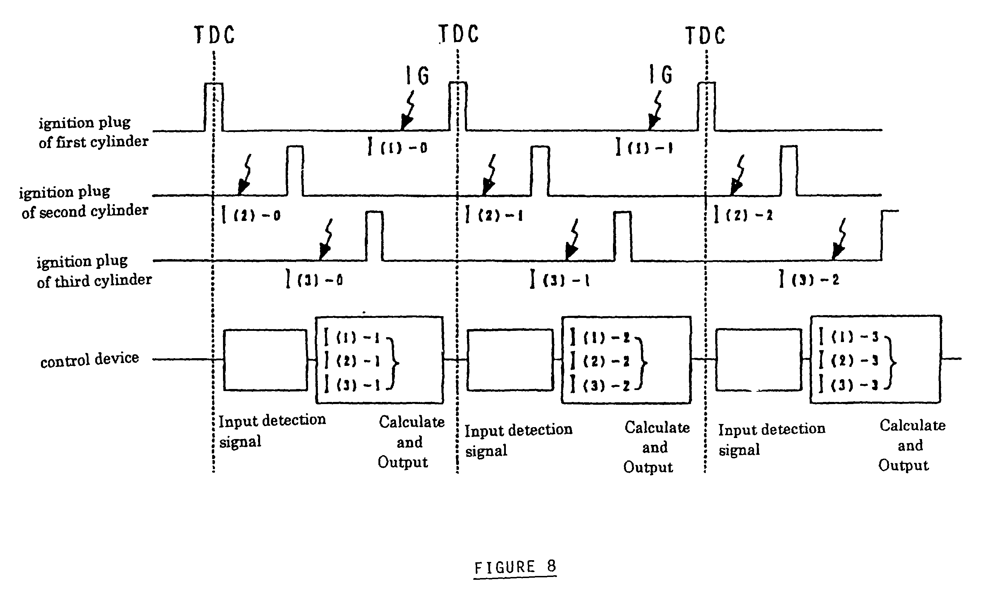

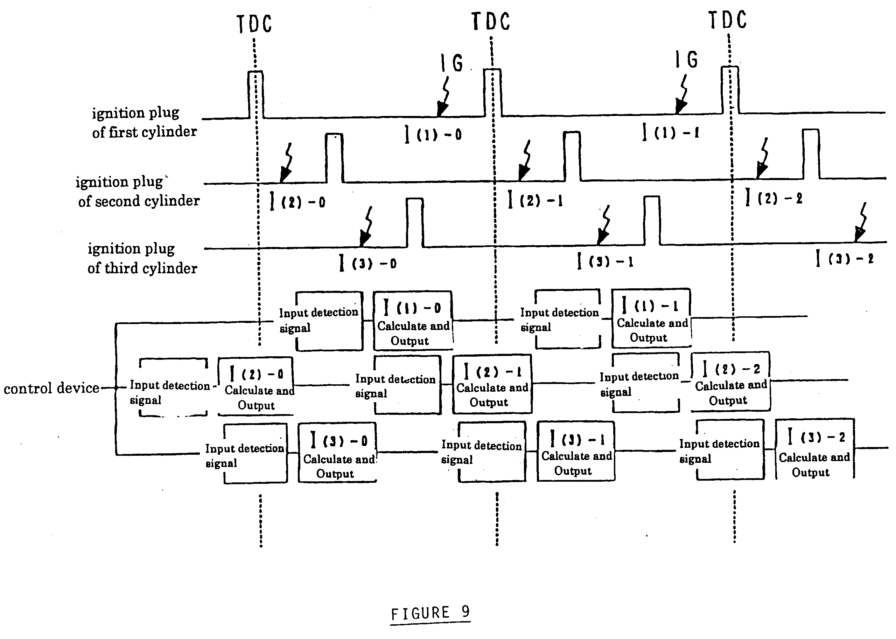

The algorithm including the steps of processing the final control values I(i) and outputing the same, may be operated so as to calculate the control values I(i) (I(1), I(2), I(3)) at one time (see Fig. 8), or may be operated so that the steps 1-8 are processed in parallel for each cylinder (see Fig. 9).

In the above-described operating condition control unit according to this invention, regarding the first cylinder 11a for example, if the final control value I(1) calculated in Step 8 is smaller than the reference control value Io(1), ignition timing is set later than the reference ignition timing determined from throttle opening TH and engine speed N, so as to produce exhaust gas with higher temperatures, to increase sound velocity in the exhaust pipe 31, and to advance the timing at which pressure waves of the exhaust gas return to the exhaust port, when the exhaust port 27a starts opening. As a result, even when, for example, the wall temperature T(1) of the exhaust pipe 31a corresponding to the first cylinder 11a is lower than the reference wall temperature To(1) so that the timing at which pressure waves of exhaust gas return to the exhaust port is later than the setting value and exhaust surging can not be utilized, ignition timing is corrected so as to increase the transmission velocity of pressure waves of exhaust gas and to bring the return timing of the pressure waves close to the setting value, thereby effecting improvement in output and fuel consumption through effective use of exhaust surging.

Further, in the operating condition control unit, the exhaust pipe wall temperature detecting means 37 are provided on respective exhaust pipes, and the data memory 40b stores a map of the reference temperature To(i) and the control correction value δ I(i) for each exhaust pipe for separate control of the exhaust pipes, so that the optimum control value I(i) for each cylinder can be calculated regardless of different conditions such as difference in shape and arrangement among exhaust pipes, the optimum exhaust surge appropriate for operating conditions at the time, can be obtained for each cylinder, thus providing improved output and fuel consumption.

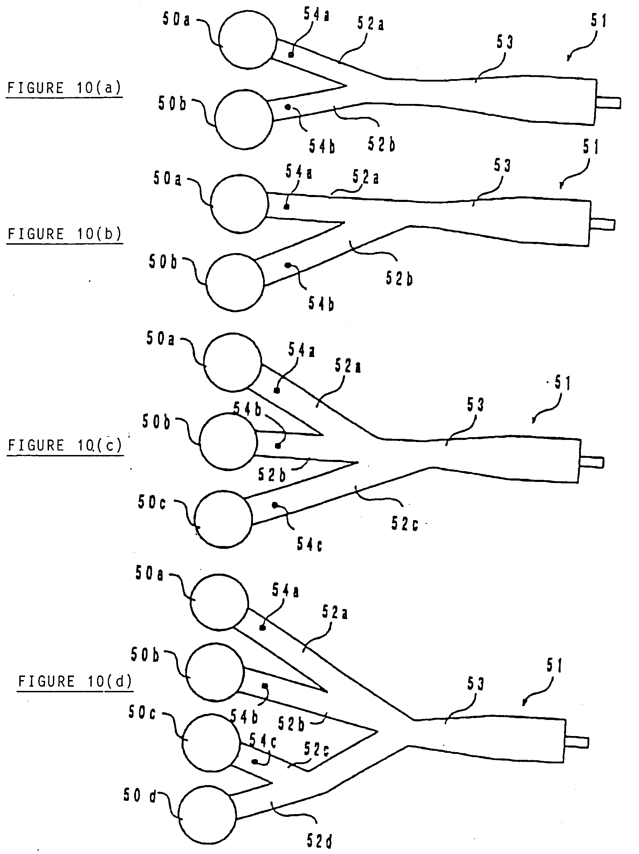

Fig. 10(a-d) shows arrangement of the wall temperature detecting means in different types of exhaust pipes from those in Figs. 1-3.

Even though Fig. 10 shows arrangements of the wall temperature detecting means only in different types of exhaust pipes, it does not show arrangements being suitable for outside interference condition. With respect to such arrangements considering outside condition in Fig. 10, concepts of them are common with the described in an above paragraph.

Numerals 50(a-d) show cylinders, and numeral 51 shows exhaust pipes. The exhaust pipe 51 includes branch pipes 52(a-d) branching for respective cylinders, and collecting pipe 53 in which the downstream ends of the branch pipes 52 are collected together.

In such types of exhaust pipes, as shown in Figs. 10(a)-10(c), branch pipes 52 are provided with respective wall temperature detecting means 54, and the control unit calculates control values for different kinds of devices in accordance with the return timing of the reflected waves in the respective exhaust pipes.

Also, if the exhaust pipe is provided with a plurality of branch pipes similar in shape and other conditions as exemplified by the branch pipes 52c, 52d in Fig. 10(d), the wall temperature detecting means 54 is mounted on one of these branch pipes (branch pipe 52c in Fig. (d)), and devices corresponding to the other branch pipes can be controlled with a final control value I calculated based on the detected results by said wall temperature detecting means 54. This procedure is not limited to the exhaust pipes with collected downstream ends shown in Fig. 10, but can be applied to the separate exhaust pipes shown in Figs. 1-3 if a plurality of exhaust pipes similar in shape and arrangement are provided.

The foregoing embodiment has been described using ignition plugs utilized for the timing changing means related to the operating condition control unit of this invention, but regarding said timing changing means, any other means may be adopted if the timing at which exhaust gas pressure waves of the cylinders emitted from the exhaust ports return to said exhaust ports after having been reflected by respective exhaust pipes, can be changed with the help of said means. Also, said means is not limited to a single one, but a plurality of timing changing means may be used in combination.

Now, several other embodiments of the timing changing means of this invention will be described below. Engines to be controlled by the operating condition control unit of this invention are not limited to the parallel three cylinder two-stroke engines as adopted in the foregoing embodiment and may be of any types with a plurality of cylinders, but if not specified otherwise, the engine equivalent to that in the first embodiment is used in the following description. Also, since the following embodiments are provided for other examples of the timing changing means, descriptions of sensors, construction of the control unit, flow chart or maps stored in the data memory or the like, are omitted, but if not specified otherwise, they are of the equivalents or similar to the first embodiment; the exhaust pipe wall temperature detecting means are each of course be mounted to respective exhaust pipes; the control unit is equivalent to the first embodiment with regard to the construction or processing steps except that only the actual values such as basic control values and control correction values are changed according to the types of timing changing means to be controlled.

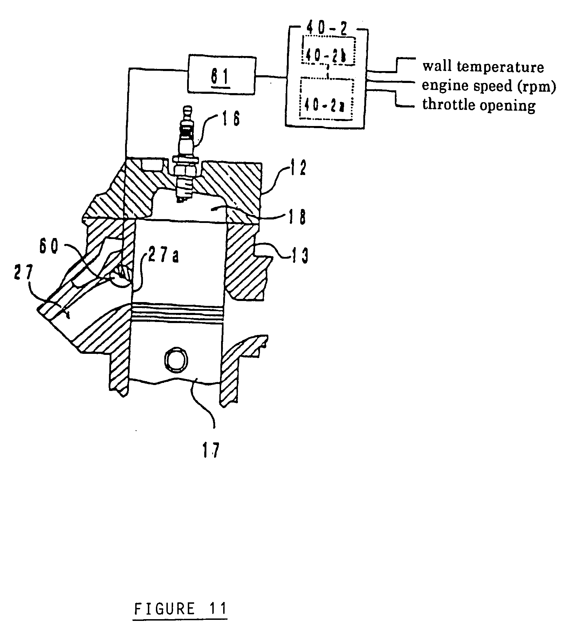

Fig. 11 is a view showing an example of a variable exhaust timing valve utilized for the timing changing means of this invention, and the same reference numerals as in the figures up to Fig. 8 designate like or equivalent parts. In this operating condition control unit, in the upper edge near the exhaust port 27a of the exhaust passage 27 in each cylinder, is provided for rotation a variable exhaust timing valve 60, with the help of which the exhaust timing can be changed. The variable exhaust timing valve 60 is driven for rotation by an operating unit 61 through the instruction of a control unit 40-2.

A processing section 40-2a of the control unit 40-2, like the first embodiment, inputs engine speed, throttle opening, and wall temperature of the exhaust pipe from the corresponding detecting means, first finds the basic control value lo2(i) of each cylinder for the variable exhaust timing valve 60 in said various operating conditions, based on the information above and the map stored in a data memory section 40-2b, and corrects this basic control value lo2(i) with the control correction value $\delta$ l2(i) read from the map, based on the temperature difference between the exhaust pipe wall temperature T(i) and the reference wall temperature To(i) to find the final control value l2(i). When the control correction value $\delta$ l2(i) is smaller than zero, and thus wall temperature T(i) of the exhaust pipe of the corresponding cylinder is lower than the reference temperature To(i), the timing at which the variable exhaust timing valve 60 is opened, is advanced, whereby exhaust gas with high temperature is discharged into the exhaust pipe, which raises the temperature of the exhaust gas in the exhaust pipe. As a result, the timing at which exhaust pressure waves return to the exhaust port, is advanced and approaches the setting value, thereby effecting improvement in output and fuel consumption through effective use of exhaust surging.

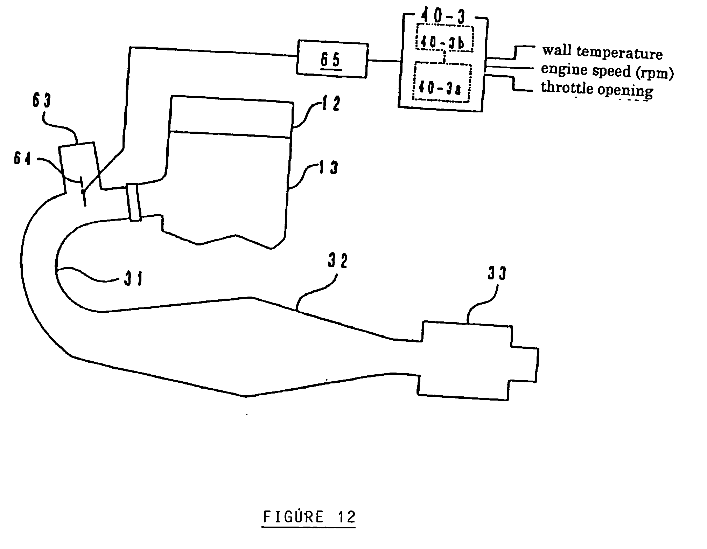

Fig. 12 is a view showing an example of a branch pipe and branch opening/closing valve utilized for the timing changing means, wherein the timing at which exhaust gas pressure waves return to the exhaust port, is controlled by changing the equivalent pipe length of the exhaust pipe. In the figure, the same reference numerals as in the figures up to Fig. 8 designate like or equivalent parts. In the operating condition control unit, a branch pipe 63 having an opening in the upstream side of the exhaust pipe 31 and connected to the same, and a branch opening/closing valve 64 for opening/closing the opening of the branch pipe 63, are provided for each exhaust pipe; when the branch opening/closing valve 64 is opened to establish communication between the branch pipe 31 and the exhaust pipe 31, the equivalent length of the exhaust pipe is increased; the branch opening/closing valve 64 is operated by an operating unit 65, based on the output signals of a control unit 40-3.

A processing section 40-3a of the control unit 40-3 in this operating condition control unit, like the first embodiment, inputs engine speed, throttle opening, and wall temperature of the exhaust pipe from the corresponding detecting means, first finds the basic control value lo3(i) of each cylinder for the branch opening/closing valve 64 in said various operating conditions, based on the information above and the map stored in a data memory section 40b, and corrects this basic control value lo3(i) with the control correction value $\delta$ l3(i) read from the map, based on the temperature difference between the exhaust pipe wall temperature T(i) and the reference wall temperature To(i) to find the final control value l3(i). When the control correction value $\delta$ l3(i) is smaller than zero, and thus wall temperature T(i) of the corresponding exhaust pipe is lower than the reference temperature To(i), the branch opening/closing valve 64 is actuated toward valve closing, and when the wall temperature T(i) is higher than the reference To(i), the branch opening/closing valve 64 is actuated toward valve opening, whereby when, for example, the practical equivalent pipe length of the exhaust pipe 31 becomes longer because of lower wall temperature of the exhaust pipe 31, the branch valve 64 is closed to decrease the equivalent pipe length, and in the opposite case, the branch opening/closing valve 63 is opened to increase the equivalent pipe length. As a result, the equvalent length of the exhaust pipe can be kept at an ideal value at all times so that output and fuel consumption can be made effective use for a better engine output and fuel consumption.

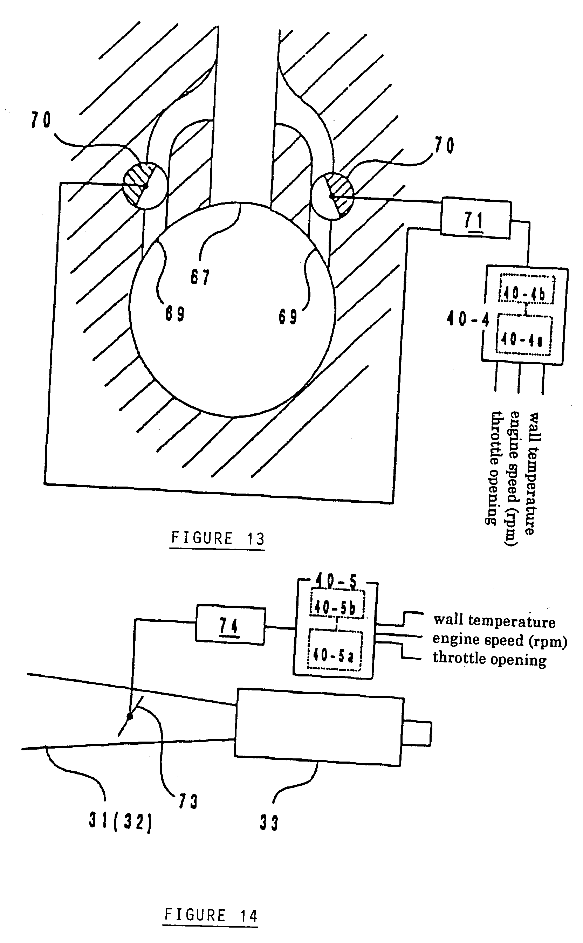

Fig. 13 is a view showing an example of opening/closing valves for opening/closing auxiliary exhaust ports utilized for the timing changing means, wherein the timing at which exhaust gas pressure waves return to the exhaust port, is controlled by changing the timing at which exhaust gas is dischaged from the exhaust port. In the figure, the same reference numerals as in the figures up to Fig. 8 designate like or equivalent parts. In this engine, a pair of auxiliary exhaust ports 69 for bypassing a main exhaust port 67 is provided at a position a little lower than the exhaust port 67; the operating condition control unit is provided with opening/closing valves 70 for opening/closing the auxiliary exhaust ports 69, for each cylinder; the opening/closing valves 70 can be operated by an operating unit 71, based on signals from a control unit 40-4.

A processing section 40-4a of the control unit 40-4 in this operating condition control unit, like the first embodiment, inputs engine speed, throttle opening, and wall temperature of the exhaust pipe from the corresponding detecting means, first finds the basic control value lo4(i) of each cylinder for the opening/closing valves 70 in said various operating conditions, based on the information above and the map stored in a data memory section 40b, and corrects this basic control value lo4(i) with the control correction value $\delta$ l4(i) read from the map, based on the temperature difference between the exhaust pipe wall temperature T(i) and the reference wall temperature To(i) to find the final control value l4(i). When the control correction value $\delta$ l4(i) is smaller than zero, and thus wall temperature T(i) of the corresponding exhaust pipe is lower than the reference temperature To(i), the auxiliary exhaust ports 64 are opened to discharge exhaust gas with higher temerature so as to raise the exhaust gas temperture, whereby the timing at which exhaust pressure waves return to the exhaust port is advanced and brought close to the setting value. As a result, exaust surging can be made effective use for a better engine output and fuel consumption.

Fig. 14 is a view showing an example of a back pressure regulating valve 73 utilized for the timing changing means of this invention, and the same reference numerals as in the figures up to Fig. 8 designate like or equivalent parts. This operating condition control unit is provided with a back pressure regulating valve 73 for each exhaust pipe, disposed for opening/closing movement at the rear of the expansion chamber 32 of the exhaust pipe 31; on the downstream side of the so-called convergent cone; the back pressure regulating valve 73 can be operated by an operating unit 74, based on signals from a control unit 40-5.

A processing section 40-5a of the control unit 40-5 in this operating condition control unit, like the first embodiment, inputs engine speed, throttle opening, and wall temperature of the exhaust pipe from the corresponding detecting means, first finds the basic control value lo5(i) of each cylinder for the back pressure regulating valve 73 in said various operating conditions, based on the information above and the map stored in a data memory section 40-5b, and corrects this basic control value lo5(i) with the control correction value $\delta$ l5(i) read from the map, based on the temperature difference between the exhaust pipe wall temperature T(i) and the reference wall temperature To(i) to find the final control value l5(i). When the control correction value $\delta$ l5(i) is smaller than zero, and thus wall temperature T(i) of the exhaust pipe of the corresponding cylinder is lower than the reference temperature To(i), the back pressure regulating valve 73 is closed to raise pressure in the exhaust pipe for increased transmission velocity of exhaust pressure waves. As a result, the timing at which exhaust pressure waves return to the exhaust port, is advanced and approaches the setting value, thereby effecting improvement in output and fuel consumption through effective use of exhaust surging.

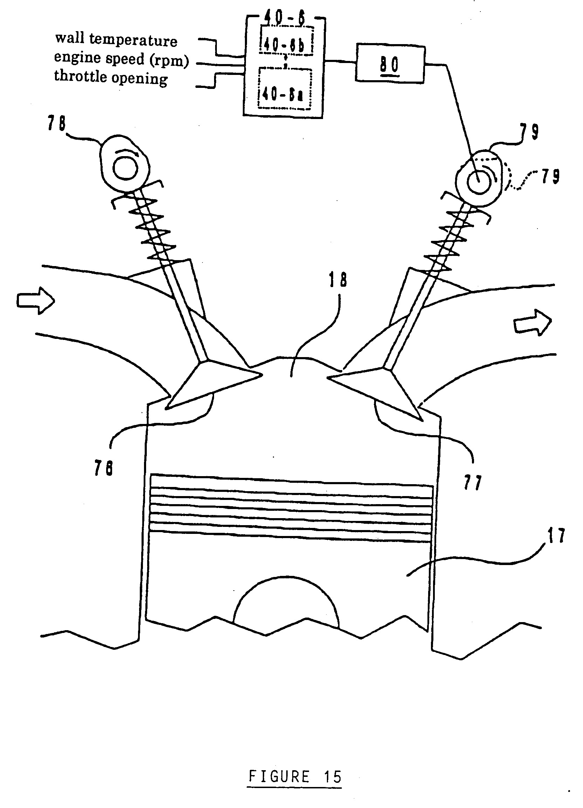

Fig. 15 is a view showing an example of a four-stroke engine having a plurality of cylinders, utilizing the operating condition control unit according to this invention. In the figure, the same reference numerals as in the figures up to Fig. 8 designate like or equivalent parts. Numeral 76 designates an intake valve, and numeral 77 an exhaust valve. These valves are driven by cans 78, 79 rotatable clockwise in the figure. The cam 79 for driving the exhaust valve 77 is so arranged that its rotary movement starting position can be changed continuously from a position shown in solid line in the figure to a position shown in the double dot and dash line, based on signals from a control unit 40-6; the timing at which the exhaust valve 77 is opened, is advanced as the rotary movement starting position of the cam 79 is shifted toward the position shown in double dot and dash line.

A processing section 40-6a of the control unit 40-6 in this operating condition control unit, like the first embodiment, inputs engine speed, throttle opening, and wall temperature of the exhaust pipe from the corresponding detecting means, first finds the basic control value lo6(i) for the rotary movement starting position of the cam 76 in said various operating conditions, based on the information above and the map stored in a data memory section 40-6b, and corrects this basic control value lo6(i) with the control correction value $\delta$ l6(i) read from the map, based on the temperature difference between the exhaust pipe wall temperature T(i) and the reference wall temperature To(i) to find the final control value l6(i). When the control correction value $\delta$ l6(i) is smaller than zero, and thus wall temperature T(i) of the exhaust pipe of the corresponding cylinder is lower than the reference temperature To(i), the rotary movement starting position of the cam 79 is moved toward a position at which the timing of the valve opening of the exhaust valve 77 is advanced, whereby exhaust gas with high temperature is discharged into the exhaust pipe, which raises the temperature of the exhaust gas in the exhaust pipe. As a result, the timing at which exhaust pressure waves return to the exhaust port, is advanced and approaches the setting value, thereby effecting improvement in output and fuel consumption through effective use of exhaust surging.

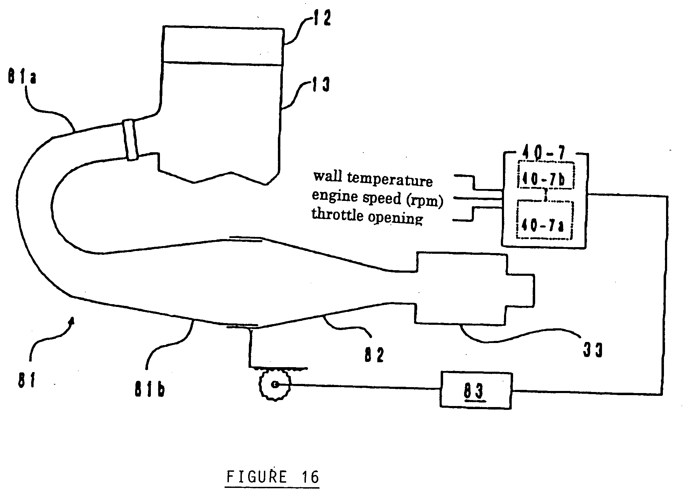

Fig. 16 is a view showing an example of an engine, utilizing the operating condition control unit according to this invention, in which exhaust pipes are connected at the upstream ends to respective cylinders and collected together integrally on the downstream side, and in said collected portion on the downstream side is provided timing changing means, through which the equivalent pipe length of the exhaust pipe can be altered. In the figure, the same reference numerals as in the figures up to Fig. 8 designate like or equivalent parts. The exhaust pipe wall temperature detecting means is provided in the upstream portion of each exhaust pipe at the end of which the corresponding cylinder is connected to said exhaust pipe.

Numeral 81 designates an exhaust pipe, which comprises, as described above, a plurality of upstream pipes 81a branching for connection to respective cylinders and a downstream collecting pipe 81b constituted by said upstream pipes 81a collected together integrally on the downstream side; the exhaust pipe wall temperature detecting means are mounted on the upstream pipes 81a, respectively. The down stream collecting pipe 81b is provided with a variable expansion chamber 82 movable in the axial direction by an operating unit 83, based on signals from a control unit 40-7; the pipe length of the exhaust pipe can be altered through the action of the variable expansion chamber 82 according to operating conditions.

A processing section 40-7a of the control unit 40-7 in this operating condition control unit, like the first embodiment, inputs engine speed, and throttle opening, and reads basic control value lo7 at the variable expansion chamber 82, from the map stored in a data memory 40-7b, based on the information above. Then, input wall temperatures (i) of exhaust pipes from corresponding detecting means, and find the mean wall temperature T of these wall temperatures T(i) using the following equation, where C(i) (i=1-3) is a factor for weighting the wall temperatures T(i), taking into account mounting environment of the wall temperature detecting means.

$$T=[C(1)*T(1)+C(2)*T(2)+C(3)*T(3)]/[C(1)+C(2)+C(3)]$$

Then, read the control correction value δ I7 from the map, based on the temperature difference between the mean wall temperature T and the reference mean wall temperature T stored in a data memory 40-7b in the form of map, and correct the reference control value lo7 with the control correction value δ I7 to find the final control value I7. When the control correction value δ I7 is smaller than zero, and thus wall temperature of the exhaust pipe of the corresponding cylinder is lower than the reference temperature, the variable expansion chamber 82 is moved in the direction of said chamber being contracted for shorter exhaust pipe length. As a result, the timing at which exhaust pressure waves return to the exhaust ports, is advanced and approaches the setting value, thereby effecting improvement in output and fuel consumption through effective use of exhaust surging.

The weighting factor C(i), used in finding the mean value T of the exhaust pipe wall temperatures T(i), is determined according to the magnitude or influence of environment on the exhaust pipes, taking into account the shape and arrangement as well as weather conditions. For example, if the exhaust pipe has three branch pipes, as shown in Fig. 10(c), one of which is straight and the other two is of a bent shape, the influence on the straight pipe is greater than that on the counterparts. Thus, the factor C is set as C(1)=2.5, C(2)=5.0, C(3)=2.5 for the upstream pipes 52a, 52b, 52c, respectively.

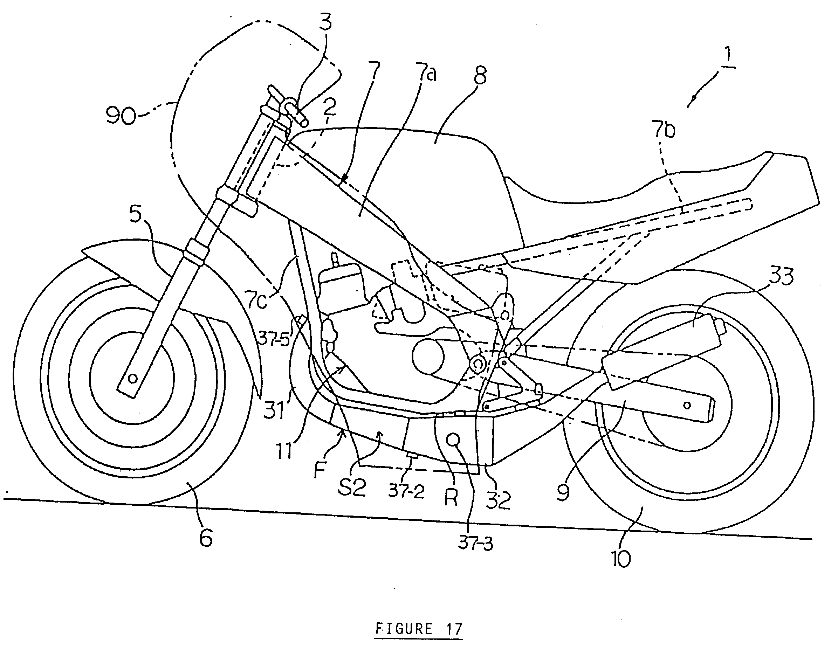

Finally, another embodiment of the mounting position and mounting method of the exhaust pipe wall temperature detecting means 37 according to this invention is described with reference to Figs. 17-20, through which the same reference numerals as in the figures up to Fig. 8 designate like or equivalent parts.

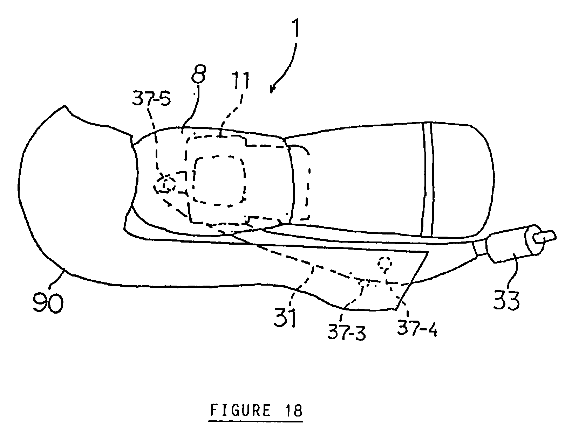

Fig. 17 is a schematic side view of a motorcycle showing another embodiment of the mounting position of the exhaust pipe wall temperature detecting means according to this invention, and Fig. 18 is a schematic plan view of an essential part of the motorcycle shown in Fig. 17.

This motorcycle 1, as shown in double dot and dash line in the figure, is provided with a cowl 90 covering a head pipe 2 and a steering shaft (not shown), extending to both sides of the vehicle so as to cover a main frame 7, an engine 11 and the like, and extending further to the underside of the exhaust pipe 31 so as to cover the area near an expansion chamber 32 of the exhaust pipe 31, with the extended portions connected to each other.

Exhaust pipe wall temperature detecting means 37-2 is mounted to the outside surface F of the exhaust pipe 31 at the portion covered by the cowl 90 (see Fig. 4, that is, the portion corresponding to the outside surface F of Fig. 4, the sectional view of the mounting portion of the exhaust pipe 31, taken in the direction normal to the exhaust gas flow). Thus, the exhaust pipe wall temperature detecting means 37-2 is shielded from flying stones from below by the cowl, and from rain and wind by the engine 11 and the exhaust pipe 31, so that the wall temperature of the exhaust pipe 31 can be detected exactly at all times.

In the vehicle with the cowl 90, the mounting position of the exhaust pipe wall temperature detecting means is not limited to that of the above-described exhaust pipe wall temperature detecting means 37-2, but the same effects can be obtained at any position on the exhaust pipe if the portion is covered by the cowl 90 and free from interference with other parts. Therefore, as exemplified by the exhaust pipe temperature detecting means 37-3 in Figs. 17, 18, for example, the detecting means may be mounted to the side surface S2 (or S1) of the exhaust pipe 31, the portion covered, of its upper side, side, and lower side by the cowl 90, and as exemplified by the exhaust pipe wall temperature detecting means 37-4, mounted to the position covered, of its upper side by the cowl 90 and, of its lower side by the exhaust pipe 31 itself. Further, the portion of the exhaust pipe 31 covered by the cowl 90 is not limited to the area near the expansion chamber 32 of the exhaust pipe 31, but the detecting means may be mounted to the exhaust pipe at any position if the portion is covered, of at least one of its upper side, lower side, and side facing forward by the cowl 90, and as shown by the exhaust pipe wall temperature detecting means 37-5, for example, may of course be mounted to the outside surface F, the portion of the exhaust pipe 31 covered at the upstream side by the cowl.

In this way, in the vehicle with the cowl 90, as a result of the exhaust pipe wall temperature detecting means being mounted on the portion of the exhaust pipe covered by the cowl, the degree of freedom is expanded for the mounting position of the exhaust pipe wall temperature detecting means, no additional parts are needed only for shielding the exhaust pipe wall temperature detecting means from outside interference, thereby providing the cost advantage, and the exact wall temperature can be detected so that the intended object of stable engine output and improved fuel consumption can be accomplished.

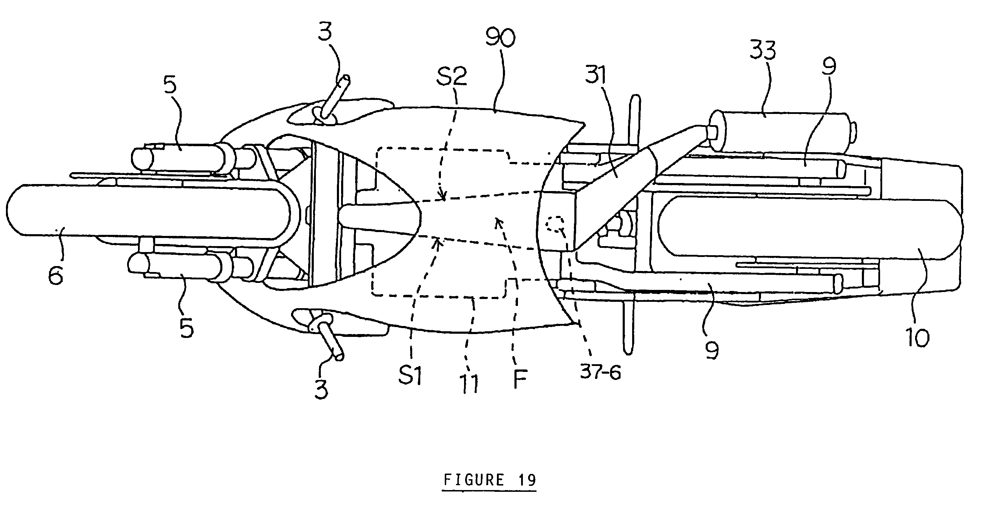

Fig. 19 is a schematic bottom view of a motorcycle showing another embodiment of the mounting position of the exhaust pipe wall temperature detecting means in a vehicle having the exhaust pipe 31 extending rearwardly, passing under the engine 11.

The exhaust pipe 31 extends rearwardly from the exhaust port (not shown), passing under the engine 11. The motorcycle is provided with a cowl 90 of the same type as shown in Figs. 17, 18.

When the exhaust pipe 31 passes under the engine 11 in this way, the exhaust pipe wall temperature detecting means can be mounted to the rear side surface R of the exhaust pipe at any position corresponding to the underside of the engine 11, whether being covered by the cowl 90 or not.

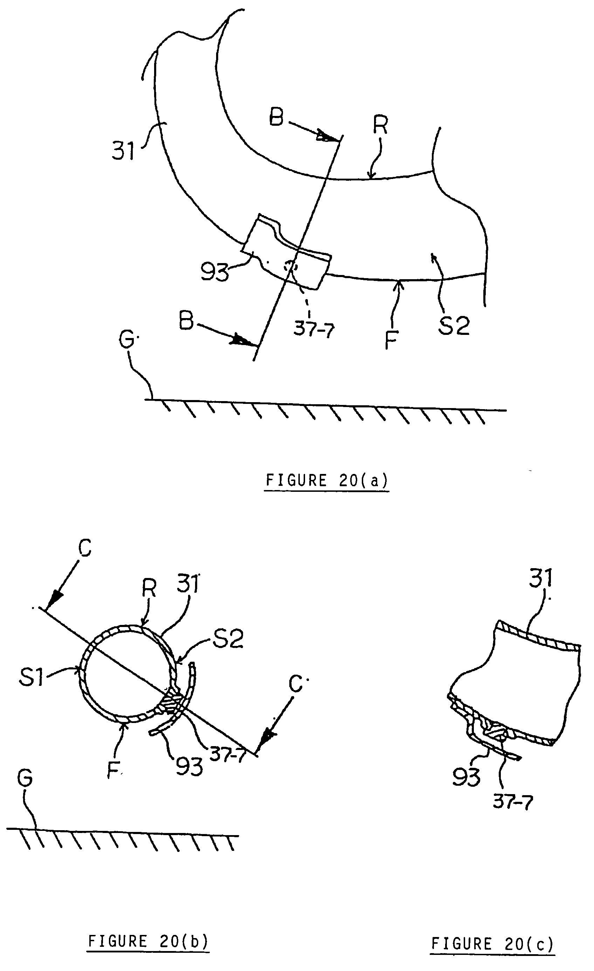

Fig. 20 shows another mounting method of the exhaust pipe wall temperature detecting means, Fig. 20(a) is a partial enlarged view of the bent portion of the exhaust pipe, Fig. 20(b) is a sectional view taken along line B-B of Fig. 20(a), and Fig. 20(c) is a sectional view taken along line C-C of Fig. 20(b). The exhaust pipe in this figure is similar in construction to the exhaust pipe 31 of the embodiment shown in the figures up to Fig. 8.

To the bent portion of the exhatist pipe 31 is mounted an exhaust pipe wall temperature detecting means 37-7 with its center at the lower side of the side surface S2, and a cover 93 is attached with proper fitting members such as bolts so as to cover the exhaust pipe wall temperature detecting means 37-7 from the front (on the left side of Fig. 20(a)) to the rear of the vehicle.

The exhaust pipe wall temperature detecting means 37-7, as shown in Figs. 20(a), 20(b), is mounted to the surface of the exhaust pipe 31 (that is, S2, and accordingly side surface S1 or back surface R is available) away from the outside surface F facing the road surface G and covered by the cover 93 from the front to the rear of the vehicle so that the temperature detecting means is not exposed to flying stones or running wind during running, and since it is mounted to the lower side of the side surface S2 of the exhaust pipe 31, it is shielded from rain and wind by the exhaust pipe 31 itself. Therefore, the above-described exhaust pipe wall temperature detecting means 37-7 is shielded from all the outside interference so that the wall temperature of the exhaust pipe 31 can be detected exactly, thereby producing the intended effects of stable engine output and improved fuel consumption. Further, as described above, the degree of freedom of the mounting position of the exhaust pipe wall temperature, detecting means is expanded by attaching the cover 93 additionally.

While the foregoing embodiments have been described by way of example in which various timing changing means such as an ignition plug 16 and variable exhaust timing valve 60 are controlled by separate operating condition control units, respectively, this invention is not limited thereto, and an alternative arrangement may of course be adopted in which a plurality of timing changing means are controlled simultaneously by a single operating condition control unit.

The engine operating condition control unit according to an embodiment is characterized in that in an engine with a plurality of cylinders, each exhaust pipe For each cylinder is provided with their respective means for detecting wall temperature of the exhaust pipe, in a portion other than the outer side of the bent portion of said exhaust pipe, and the timing changing means is controlled according to the information from the detecting means, or the data of the wall temperature of the exhaust pipe to adjust the timing at which exhaust gas pressure waves return to the exhaust port. Therefore, even when a plurality of exhaust pipes are in different conditions in shape and arrangement, wall temperature of the exhaust pipes can be detected exactly, whereby exhaust surging can be made effective use for a better engine output and fuel consumption.

Also, the operating condition control unit according to a further embodiment of this invention is effective for engines for transportation equipment such as motorcycles, snowmobiles, automobiles or watercraft, as well as for stationary engines because of its feedback control capacity for ambient temperature changes.

In addition, though exhaust gas temperature is affected by changes in the exhaust pipe wall temperature and thus transmission velocity of the pressure waves is changed when the exhaust pipe is exposed to rain, wind, snow or the like, the operating condition control unit of this invention is able to provide improved engine output and fuel consumption through feedback control.

According to the operating condition control unit of this invention, wall temperature detecting means for detecting exhaust pipe wall temperature is provided in the exhaust pipe extending rearwardly of the engine, with a bent portion in the middle thereof, at an appropriate position other than the outer side surface of said bent portion, so that no expensive wall temperature detecting means is needed which has a heat resistant characteristic capable of detecting higher temperatures. Further, since the wall temperature detecting means is not exposed directly to exhaust gas, it is less affected by temperature changes of exhaust gas in each exhaust cycle so that wall temperature can be detected exactly. As a result, the intended object of improved engine output and fuel consumption can be achieved reliably.

Also, this invention has been described with reference to the embodiments in which the engine operating condition control unit is applied to an engine with a plurality of cylinders, but is not limited to this embodiments and may be applied to single cylinder type engines.

The engine operating condition control unit according to an embodiment is characterized in that in an engine with a plurality of cylinders, exhaust pipes are each provided with their respective means for detecting the wall temperature of the exhaust pipes, and timing changing means are controlled according to the information from the detecting means, or the data of the wall temperature of the exhaust pipes to adjust the timing at which exhaust gas pressure waves return to the exhaust ports. Therefore, even when a plurality of exhaust pipes are in different conditions in shape and arrangement, wall temperature of the exhaust pipes can be detected exactly, whereby exhaust surging can be made effective use for a better engine output and fuel consumption.

According to the engine condition control unit of another embodiment of the invention, detecting means for detecting the wall temperature of exhaust pipe is mounted to the back side of the exhaust pipe at a place where at least upper side of the exhaust pipe is shielded by engine components so as not to be affected by outside interference, thereby providing stable and reliable wall temperature detection. Further, timing changing means is operated according to the detected data and controlled so that the exhaust gas pressure waves emitted from the exhaust port return to the exhaust port after having been reflected by the exhaust pipe, thereby effecting stable engine output and improved fuel consumption.

Although various features of the present invention have been described with reference to a number of embodiments, it is still obvious and even intended that a plurality of combinations of these features are possible, if not excluding each other.

## Claims

1. Internal combustion engine (11) for a vehicle, for example a motorcycle (1) comprising at least one exhaust pipe (31a, 31b, 31c) extending, as seen in driving direction of said vehicle, from at least one exhaust port (27a, 27b, 27c) of at least one combustion chamber (18) in at least one cylinder (11a, 11b, 11c) rearwardly from said engine (11), at least one exhaust wall temperature detecting means (37a, 37b, 37c), and a control unit (40) for controlling said engine (11) at least on the basis of the exhaust wall temperature detected, **characterized in that** said at least one exhaust wall temperature detecting means (37a, 37b, 37c) is located at the wall of said at least one exhaust pipe (31a, 31b, 31c) in cross-section thereof at a position outside of a range (F) of said wall directed to said driving direction.

2. Internal combustion engine (11) for a vehicle, for example a motorcycle (1) comprising at least one exhaust pipe (31a, 31b, 31c) extending, as seen in driving direction of said vehicle, from at least one exhaust port (27a, 27b, 27c) of at least one combustion chamber (18) in at least one cylinder (11a, 11b, 11c) rearwardly from said engine (11), at least one exhaust wall temperature detecting means (37a, 37b, 37c), and a control unit (40) for controlling said engine (11) at least on the basis of the exhaust wall temperature detected, **characterized in that** said at least one exhaust wall temperature detecting means (37a, 37b, 37c) is located at a position where it is protected from environmental influences.

3. Internal combustion engine according to claim 1, **characterized in that** said range (F) is defined by an angle of about 120°, the corner of which is equal to the center point (C) of the cross-section of said exhaust pipe (31a, 31b, 31c).

4. Internal combustion engine according to claim 1 or 3, **characterized in that** said wall further comprising first and second side sections (S1, S2) and an inner side section (R) opposite to said driving direction and between said side sections (S1, S2) and that said exhaust wall temperature detecting means (37a, 37b, 37c) is located in said first side section (S1), said second side section (S2) or said inner section (R).

5. Internal combustion engine according to at least one of the preceding claims 1, 3 or 4, **characterized in that** the at least one exhaust pipe (31a, 31b, 31c) comprising a bent portion and that said at least one exhaust wall temperature detecting means (37a, 37b, 37c) is located to said bent portion.

6. Internal combustion engine according to at least one of the preceding claims 1 to 5, **characterized by** timing changing means (60) for changing the timing at which exhaust gas pressure wave emitted from said exhaust port (27a, 27b, 27c) return to said exhaust port (27a, 27b, 27c) after being reflected by said exhaust pipe (31a, 31b, 31c).

7. Internal combustion engine according to claim 6, **characterized by** control means for controlling said timing changing means (60) according to the detected exhaust wall temperatures.

8. Internal combustion engine according to at least one of the preceding claims 1 to 7, **characterized in that** said exhaust wall temperature detecting means (37a, 37b, 37c) is mounted to said exhaust pipe (31a, 31b, 31c) at a location where at least the upper side thereof is shielded by engine components so as to be prevented from outside interferences.

9. Internal combustion engine according to at least one of the preceding claims 1 to 7, **characterized by** means for shielding said exhaust wall temperature detecting means (37a, 37b, 37c) from outside interferences.

10. Internal combustion engine according to at least one of the preceding claims 1 to 9, **characterized in that** said at least one exhaust pipe (31a, 31b, 31c) first extends, at the upstream side, forwardly of the engine (11), followed by a bent portion to extend rearwardly so as to be free of other ports and at the downstream side said exhaust pipe (31a, 31b, 31c) comprising an expansion chamber (32).

11. Internal combustion engine according to at least one of the preceding claims 1 to 10, **characterized by** engine speed detecting means (35) and throttle opening detecting means (36).

12. Internal combustion engine according to at least one of the preceding claims 4 to 11, **characterized in that** said inner side section (R) is defined by an angle of about 120° the corners of which are equal to the center point (C) of the cross-section of said exhaust pipe (31a, 31b, 31c) and that said exhaust wall temperature detecting means (37a, 37b, 37c) is provided to the exhaust pipe (31a, 31b, 31c) with its center located on the inner side section (R).

13. Internal combustion engine according to at least one of the preceding claims 1 to 12, **characterized in that** said control unit (40) comprising an operating unit (41) for controlling the ignition timing according to information detected.

14. Internal combustion engine according to at least one of the preceding claims 1 to 13, **characterized in that** said control unit (40) comprising a processing section (40a) and a data memory (40b) for storing maps containing control data values.

15. Internal combustion engine according to claim 14, **characterized in that** said control values comprising values for ignition timing (Io(i)) and/or throttle opening (TH) and/or engine speed (NE) and/or reference wall temperatures (To(i)).

16. Internal combustion engine according to claim 14 or 15, **characterized in that** said processing unit (40a) is adapted to read out data from the maps, processing same with detected values in order to calculate new data to control the engine (11).

17. Internal combustion engine according to at least one of the preceding claims 1 to 16, **characterized in that** said engine comprising at least two cylinders (50a, 50b, 50c, 50d), said exhaust pipe (51) comprising branch pipes (52a, 52b, 52c, 52d) the number of which corresponds to the number of cylinders (50a, 50b, 50c, 50d), and that each branch pipe (52a, 52b, 52c, 52d) is provided with an exhaust wall temperature detecting means (54a, 54b, 54c, 54d).

18. Internal combustion engine according to at least one of the preceding claims 1 to 16, **characterized in that** said engine is a two-cycle stroke internal combustion engine having one or more cylinders, or a four-stroke cycle engine having one or more cylinders.

19. Internal combustion engine according to at least one of the preceding claims 6 to 18, **characterized in that** said timing changing means are means for controlling an ignition plug (16), a variable exhaust timing valve (60), branch pipe opening/closing valves (64), valves (70) for opening/closing auxiliary exhaust ports, back pressure regulating valves (73), exhaust valves (77), or means for changing the equivalent length of the exhaust pipe (31, 51, 81).

20. Internal combustion engine according to at least one of the preceding claims 1 to 19, **characterized in that** a cowl (90) is provided to protect the part facing to the driving direction and the lower part of said engine (11) and said exhaust pipe (31).

FIGURE 1

EP 0 785 343 A1

FIGURE 2

FIGURE 3

FIGURE 4

Control unit 40

| | | |
|---|---|---|
| Throttle opening detection means 36 | TH → | |
| Engine RPM detection means 35 | NE → | Processing section 40a |
| Wall temperature detection means of first cylinder 37a | T(1) → | |
| Wall temperature detection means of second cylinder 37b | T(2) → | |
| Wall temperature detection means of third cylinder 37c | T(3) → | |

Processing section 40a

I(1) → Ignition plug of first cylinder 16a

I(2) → Ignition plug of second cylinder 16b

I(3) → Ignition plug of third cylinder 16c

Data memory 40b

FIGURE 5

FIGURE 6(a)

FIGURE 6(b)

FIGURE 6(c)

Start

Step 1

Input NE and TH

Step 2

Input T(1)

Step 3

Read Io(1)

Step 4

Read To(1)

Step 5

Calculate $\delta$ T(i)

$( \delta T(i) = T(i) - To(i) )$

Step 6

Read $\delta$ I(i)

Step 7

Calculate I(i)

$( I(i) = Io(i) - \delta I(i) )$

Step 8

Output I(i)

Step 9

Engine stop?

N

Y

END

FIGURE 7

TDC TDC TDC

IG IG

ignition plug
of first cylinder

$I(1)-0$ $I(1)-1$

ignition plug
of second cylinder

$I(2)-0$ $I(2)-1$ $I(2)-2$

ignition plug
of third cylinder

$I(3)-0$ $I(3)-1$ $I(3)-2$

control device

$$
\begin{array}{c}
I(1)-1 \\
I(2)-1 \\
I(3)-1
\end{array}\Bigg\}
\qquad
\begin{array}{c}
I(1)-2 \\
I(2)-2 \\
I(3)-2
\end{array}\Bigg\}
\qquad
\begin{array}{c}
I(1)-3 \\
I(2)-3 \\
I(3)-3
\end{array}\Bigg\}
$$

Input detection
signal

Calculate
and
Output

Input detection
signal

Calculate
and
Output

Input detection
signal

Calculate
and
Output

FIGURE 8

EP 0 785 343 A1

EP 0 785 343 A1

FIGURE 9

FIGURE 10(a)

50a 54a 52a 53 51
50b 54b 52b

FIGURE 10(b)

50a 54a 52a 53 51
50b 54b 52b

FIGURE 10(c)

50a 54a 52a 53 51
50b 54b
52b
50c 52c 54c

FIGURE 10(d)

50a 54a 52a 53 51
50b
50c 54b 52b
54c 52c
50d 52d

FIGURE 11

FIGURE 12

FIGURE 13

70

70

71

67

69          69

40-4

40-4b

40-4a

wall temperature
engine speed (rpm)
throttle opening

FIGURE 14

40-5

40-5b

74

wall temperature
engine speed (rpm)
throttle opening

40-5a

31(32)        73        33

wall temperature
engine speed (rpm)
throttle opening

40-6
40-6b
40-6a

80

78
79
79
18
76
77
17

FIGURE 15

FIGURE 16

FIGURE 17

FIGURE 18

EP 0 785 343 A1

FIGURE 19

FIGURE 20(a)

FIGURE 20(b)

FIGURE 20(c)

EP 0 785 343 A1

<table>
<tr><td></td><td>European Patent Office</td><td>EUROPEAN SEARCH REPORT</td><td>Application Number<br>EP 97 10 0743</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | PATENT ABSTRACTS OF JAPAN<br>vol. 096, no. 001, 31 January 1996<br>& JP 07 247846 A (YAMAHA MOTOR CO LTD),<br>26 September 1995,<br>* abstract * | 1,2,5-7,<br>10,11,<br>13-16,<br>18,19 | F01N7/00<br>F02D41/14 |
| A | PATENT ABSTRACTS OF JAPAN<br>vol. 095, no. 009, 31 October 1995<br>& JP 07 150954 A (YAMAHA MOTOR CO LTD),<br>13 June 1995,<br>* abstract * | 1,2,6,7,<br>10,13,<br>18,19 | |
| A | PATENT ABSTRACTS OF JAPAN<br>vol. 012, no. 031 (M-663), 29 January 1988<br>& JP 62 186064 A (YAMAHA MOTOR CO LTD),<br>14 August 1987,<br>* abstract * | 1,13-15 | |
| A | DE 39 14 264 C (DAIMLER-BENZ) 13 September 1990<br>* the whole document * | 1,11,<br>14-18 | TECHNICAL FIELDS SEARCHED (Int.Cl.6) |
| A | US 4 193 965 A (CULLINGFORD CHRISTOPHER V ET AL) 18 March 1980<br>* column 3, line 64 - column 4, line 37 *<br>* column 5, line 49 - line 57; figures 4,5 * | 1,2,9 | F01N<br>F02D |
| A | EP 0 500 105 A (YAMAHA MOTOR CO LTD) 26 August 1992<br>* column 9, line 2 - line 8; figures * | 1,20 | |
| A | FR 2 636 371 A (CRMI) 16 March 1990 | | |

The present search report has been drawn up for all claims

| Place of search | Date of completion of the search | Examiner |
|---|---|---|
| THE HAGUE | 10 April 1997 | Sideris, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

31